# EUROPEAN PATENT SPECIFICATION

(11) **EP 1 504 853 B1**
(45) Date of publication and mention of the grant of the patent: **16.07.2008**
(21) Application number: 04023548.3
(22) Date of filing: 18.11.2000
(51) Int. Cl.: B25H 1/00, B23D 51/02

(54) **Multi-functional worktable system**
Multifunktionelles Arbeitstischsystem
Système multifonctionnel de table de travail

(30) Priority: 19.11.1999 GB 9927480; 02.02.2000 GB 0002394; 10.05.2000 GB 0011222
(43) Date of publication of application: 09.02.2005
(62) Divisional of application: 00981274.4
(73) Proprietor: KENT, Frank Michael John, London SW15 2NL (GB)
(72) Inventor: KENT, Frank Michael John, London SW15 2NL (GB)
(74) Representative: Klinghardt, Jürgen

(56) References cited:
- GB-A- 2 287 207
- US-A- 4 350 066
- US-A- 4 487 403
- US-A- 5 052 454

## Description

The present invention relates to a worktable system comprising a supporting structure, fastening means supported by said supporting structure for fastening a workpiece, and a tool support means for supporting a tool, in particular a power tool, wherein said fastening means are adapted to provide guidance for movement of said tool support means, so as to machine the workpiece by said tool while it is fastened by said fastening means. The present invention further relates to a device for supporting a tool, in particular a power tool, on a worktable having fastening means for fastening a workpiece, comprising a sliding base for slidabely engaging with the fastening means of the worktable so as to achieve a directional movement with relation to the worktable.

Such a worktable system has multi-functional use in connection with building work and the like. Usually, such a worktable system is transportable and, therefore, appropriate for home working.

US 5 052 454 A discloses a portable routering apparatus for use with a handheld router to rout figures, designs, alphanumeric characters and the like without the requirements of a template for each figure, design, or character, wherein the apparatus is adjustable to accommodate workpieces of variable width and thickness and unlimited length. The apparatus consisting of a base, an adjustable workpiece clamp, a router guide fence, a plurality of indexing scales, and a plurality of guide blocks, wherein a workpiece is positioned on the base and secured with the clamp, and the movement of a hand-held router thereon is guided by the guide fence and blocks and positioned using the indexing scales.

GB 2 287 207 A discloses a power tool mounting for mounting a power tool above a worktable. The power tool mounting has first fixing means for engaging a worktable and second fixing means in the form of rails for engaging a slider for the power tool. The rails may be moved from a storage position to a work position, at a distance from the worktable, for mounting a power tool above the worktable.

Known worktable systems provide for unconvenient handling of workpieces in conjunction with power tools.

Therefore, an object of the present invention is to provide a worktable system which allows a convenient handling of workpieces in conjunction with power tools for machining workpieces.

In order to achieve the above and other objects, in accordance with a first aspect of the present invention, there is provided a worktable system comprising a supporting structure, fastening means supported by said supporting structure for fastening a workpiece, and a tool support means for supporting a tool, in particular a power tool, wherein said fastening means are adapted to provide guidance for movement of said tool support means, so as to machine the workpiece by said tool while it is fastened by said fastening means, characterized in that said tool support means comprises a sliding mount for carrying the tool, said sliding mount being movable at an angle, preferably at a right angle, with relation to the direction of the guidance provided by said fastening means.

In accordance with a second aspect of the present invention, there is provided a device for supporting a tool, in particular a power tool, on a worktable having fastening means for fastening a workpiece, comprising a sliding base for slidabely engaging with the fastening means of the worktable so as to achieve a directional movement with relation to the worktable, characterized by a sliding mount for carrying the tool, said sliding mount being movable at an angle, preferably at a right angle, with relation to the direction of the movement of the sliding base.

Accordingly, in the worktable system of the present invention the fastening means simultaneously fasten a workpiece and provide direction guidance for a tool to machine the workpiece. The workpiece can be machined at a point above and/or below the fastening means.

Every kind of tool and in particular every kind of power tool like e.g. a saw or a drilling machine can be used.

Further, it should be noted that in the terms of this invention, the "supporting structure" would normally comprise a top support with leg support structure, but it could also consist of a top frame only or have other constructions.

Advantageous embodiments are defined in the dependent claims.

Preferably, stop means are provided for limiting the directional guidance.

Usually the fastening means comprise jaws. In such case, preferably at least one edge of at least one jaw can be adapted to provide for movement of the tool. So, an edge of a jaw length may be used as a guide for a tool to machine a workpiece. For instance, the workpiece may be clamped to and protrude from the underside of a jaw. The tool may be guided by the outside edge of a jaw or the inside edge of a jaw. Alternatively, the two inside edges of two jaws may be used when such jaws are set at a parallel width to suite the tool.

A guidance means for movement of the tool may be provided wherein the guidance means operatively cooperate with the fastening means.

In a further preferred embodiment wherein the fastening means comprise at least one groove, the tool support means may comprise at least one slider slidably received in the at least one groove.

In a still further preferred embodiment wherein the fastening means comprise jaws, the fastening means further comprise a moveable clamping element provided beneath the jaws and to be tightened up to the underside of at least one jaw for clamping the workpiece against the underside of the jaw. So, the jaw forms the fixed part of a vertical clamping system in which the moveable clamping element forms a second moveable part which is tightened up to the underside of the jaw.

Alignments means for aligning the workpiece in relation to the fastening means can be provided wherein the fastening means comprise jaws. In such embodiment, the alignment means may preferably be adapted so as to align the workpiece in line essentially perpendicular to the jaw length. So, for instance, a workpiece which may be clamped to the underside of a jaw may be aligned in a line perpendicular to the jaw length such that the tool using the edge of a jaw as a guide may machine the workpiece at a true right angle.

Moreover, support and alignment means may be provided between the jaws for supporting and aligning a workpiece at a point or points along the machining line of the tool. In this embodiment, the support and alignment means may preferably by adjustable from side to side and/or in vertical direction to suite the width of different tools and/or the depth of different thicknesses of workpieces.

Further, blade guiding means may be situated beneath the workpiece for guiding a blade of a jig saw to achieve a straight vertical cut.

Holding means may be attached to the fastening means for holding the workpiece at an adjustable height below, at the level of and/or above the fastening means. In case of the provision of jaws, the holding means may be attached to each of the jaws and hold a workpiece at an adjustable height below, between and above the surface of the jaws permitting as necessary the workpiece to slide between the holding means and/or to be held in a tightly clamped fixed position.

Of course, the fastening means may also be adapted so as to allow the workpiece to be moved in relation to the fastening means. In this embodiment, stops may further be provided for limiting the movement path of the workpiece

The above and other objects and features of the present invention will become clear from the following description taken in conjunction with preferred embodiments with reference to the accompanying drawings in which:
- Fig. 1: is a schematic side view of a worktable;
- Fig. 2: is a partial schematic plan view of a first preferred embodiment of a worktop section of a worktable;
- Fig. 3: is a partial schematic side view of a second preferred embodiment of a worktop section of a worktable;
- Fig. 4: is a partial schematic plan view of a second preferred embodiment of a worktop section of a worktable;
- Fig. 5: is a schematic side view of the distal end of the sliding table and the sliding mount of the second embodiment;
- Fig. 6: is a schematic side view of the distal end of the sliding table showing its cross section shape in better detail of the second embodiment;
- Fig. 7: a schematic enlarged view of a stop provided at a portion of the sliding table of the second embodiment;
- Fig. 8: is a partial schematic side view of a workpiece clamped at an adjustable level by means of workpiece supports;
- Fig. 9: is a partial schematic top view of a workpiece support;
- Fig. 10: is a schematic partial side view of another machining operation wherein the workpiece is fastened between an angle and a workpiece support;
- Fig. 11: is a schematic plan view of a further preferred embodiment of the worktop section of a worktable; and
- Fig. 12: is a schematic partial side view of the embodiment of Fig. 11

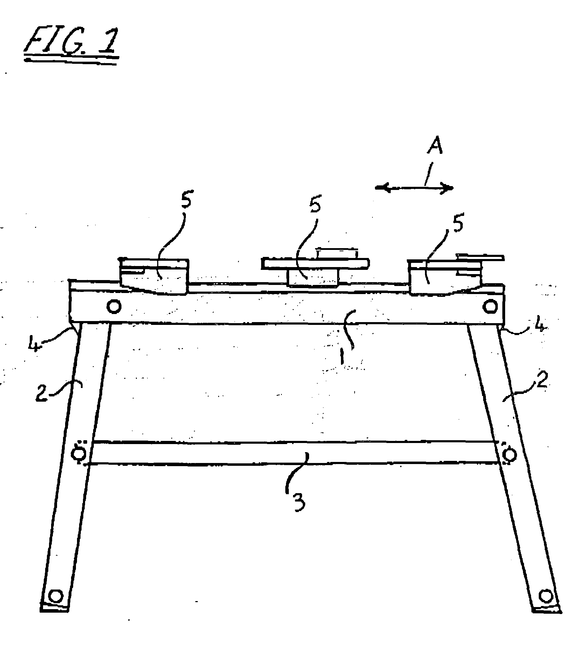

In Fig. 1 it is shown a preferred embodiment of a worktable comprising a top frame 1 with inward folding leg supports 2 braced apart by removable struts 3 against blocking elements 4 and two or more work top sections 5 arranged in selected positions on the top frame 1, two of which are provided with jaws 13 defining a fastening means having clamping function for fastening a workpiece. The jaws 13 each form a rectangular plate essentially extending over the whole width of the top frame 1, wherein at least one of the jaws 13 is movable in a direction perpendicular to its length as indicated by arrow A in Fig. 1.

The worktable shown in Fig. 1 has a foldable construction for better stowing and transportation purposes. One suitable form of construction for the worktable is that it is employed in ladder fabrication so that hollow section top frame and leg support lengths joined by hollow section cross-members may provide lightness and rigidity.

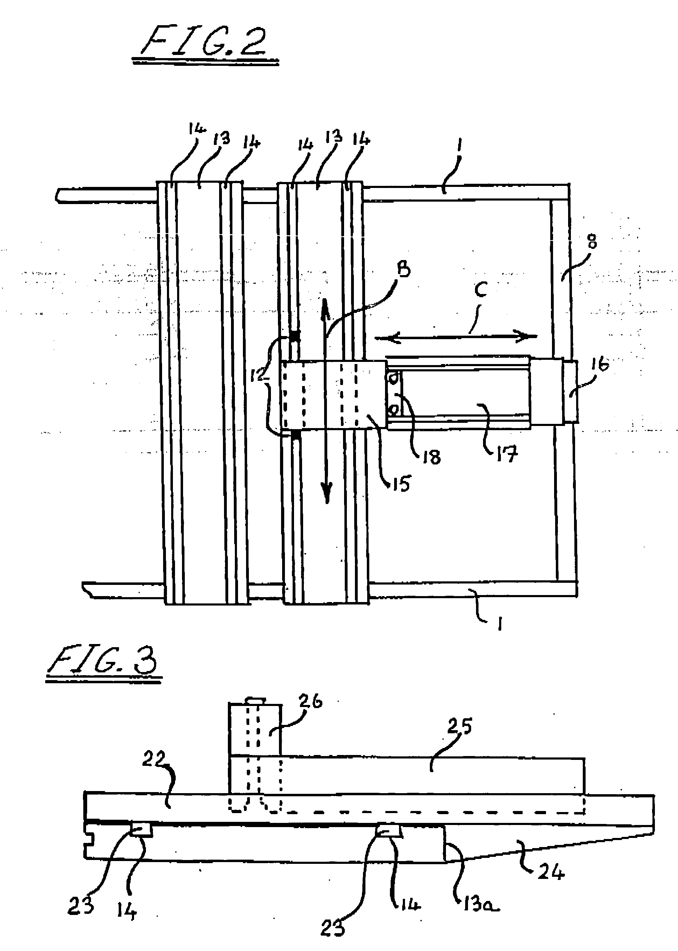

Fig. 2 is a schematic top view of a first preferred embodiment of the top frame 1 comprising a top frame cross-piece 8 forming one side and of the top frame 1. Shown in Fig. 2 are two jaws 13 which, as already mentioned above, each form a rectangular plate and are movable in a direction perpendicular to their length. Each jaw 13 includes a pair of grooves 14 spaced from each other and extending along the length of the jaws 13 adjacent to their edges, respectively. The grooves 14A are open to the top as seen in Fig. 2.

A sliding table 15 is in sliding engagement with the grooves 14 of one of the jaws 13 (i.e. the right-hand jaw 13 in Fig. 2) so as to slide in the line of arrow B in the direction of the length of the jaws 13 and, thus, of the width of the top frame 1. In order to limit the movement of the sliding table 15 along the grooves 14, there are provided stops 12 fitted in at least one of the grooves 14. Whereas the sliding table 15 is in sliding engagement with the grooves 14 and, thus, supported by the jaw 13 at its one end, the sliding table 15 is provided at its distal other end with a sliding mount 16 which supports the distal end of the sliding table 15 on the top frame cross-piece 8 in a sliding manner.

Further, the sliding table 15 comprises a sliding mount 17 which is movable perpendicular to the movement path of the sliding table 15 as indicated by arrow C. In order to limit the movement path of the sliding mount 17 along the sliding table 15, stops can be provided which are not shown in Fig. 2. Positioned on the sliding mount 17 is a mounting structure 18, e.g. a clamp, to hold a power tool, e.g. a drilling machine, (not shown) for machining a workpiece (not shown in Fig. 2) which is fastened by the jaws 13.

A preferred second embodiment of the top frame structure is,shown in Fig. 3 to 7

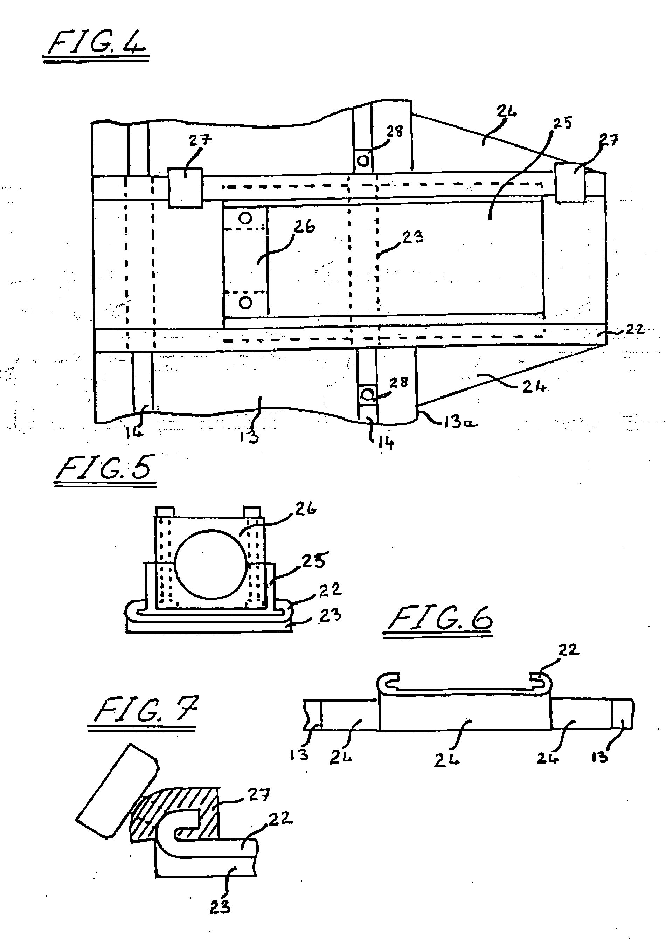

Like in the first embodiment, the second embodiment also comprises a sliding table 22 which operates along the length of the jaw 13 by means of runners 23 which are mounted at the underside of the sliding table 22 and inserted into the grooves 14 of the jaw 13 At its distal end the sliding table 22 is provided with a rear guide 24 which forms a step and is in contact with one edge 13a (the righthand edge according to the Fig. 3 and 4) of the jaw 13 so as to run along such edge

Like in the first embodiment, the second embodiment also comprises a sliding mount 25 which is movable in a direction perpendicular to the length of the jaw 13 and, thus, perpendicular to the movement path of the sliding table 22 so as to operate along the length of the sliding table 22.

Further, like in the first embodiment, a mounting structure 26 is arranged on the sliding mount 25 to fasten a power tool (not shown) for machining a workpiece (not shown). In the second embodiment, the mounting structure 26 is provided for holding a drilling machine and comprises two halves to be tightened together by screws and a circular opening defined by both halves to firmly clamp a portion of a drilling machine. Additional support means (not shown) could be provided for holding the power tool.

Adjustable stops 27 are provided on the sliding table 22 to limit the movement of the sliding mount 25 along it. A detailed view of such a stop 27 is shown in Fig. 7.

Moreover, like in the first embodiment, stops 28 are also provided in at least one groove 14 of the jaw 13 to limit the movement of the sliding table 22 along the length of the jaw 13.

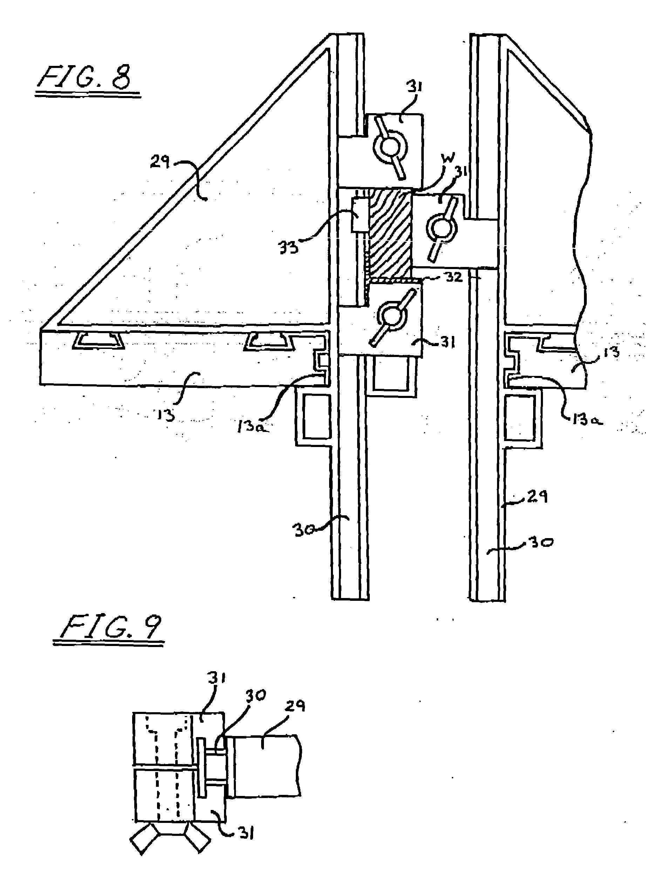

Fig. 8 is a side view of a workpiece W clamped at an adjustable level by means of workpiece supports 29 which are attached to jaws 13. Each workpiece support 29 comprises a vertical track 30 and is mounted on the jaw 13 so that a portion of the rear side of the track 30 is in contact with the inner edge 13a of the jaw 13 facing the other jaw 13. The tracks 30 of the workpiece supports 29 are provided for attaching height adjusters 31 for determining the height of the workpiece W. The height adjusters 31 of at least two different workpiece supports 29 hold a T-shaped bar 32 wherein such height adjusters 31 must be inline. Along the T-shaped bar 32 the workpiece W may be slid or held firmly dependent upon the tightening of the jaws 13. The workpiece supports 29 further comprise a slide 33 which takes up the thickness of the T-shaped bar 32.

Fig. 9 is a top view of a workpiece support 29 and the height adjuster 31 which is to be tightened into position by means of nut and bolt.

The workpiece supports 29 as shown in Fig. 8 and 9 can be used in conjunction with the first embodiment of Fig. 2 as well as with the second embodiment of Fig. 3 to 7, wherein the workpiece W is machined by a tool, in particular a power tool, supported on the top frame 1 as described above.

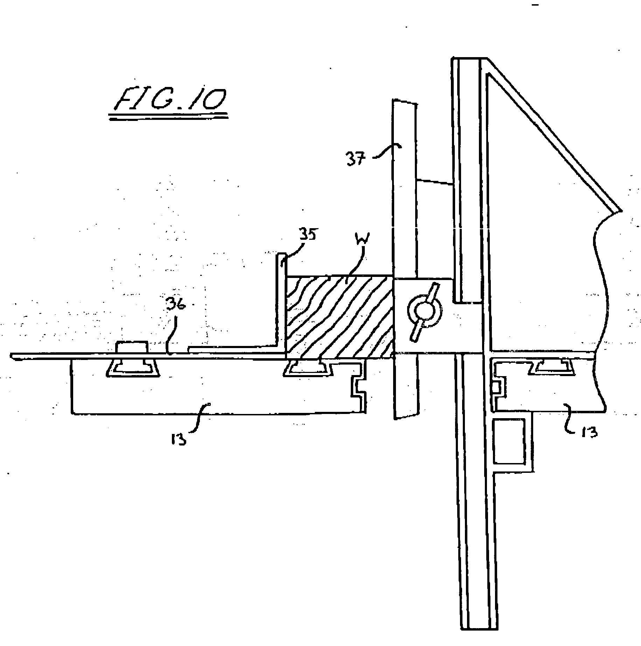

Fig. 10 is a side view of another machining operation in which the workpiece W may slide along jaw 13 between an angle 35 mounted on the jaw 13 by means of a mounting base 36 which for instance is engaged with the groove 14 of the jaw 13 (as shown in Fig. 10). On the adjacent jaw 13 is fastened a workpiece support 29 as shown in the Fig. 8 and 9. The situation shown in Fig. 10 is advantageous for using a sanding tool or a drilling machine having a sander instead of a drill bit. So, the height adjuster 31 of the workpiece support(s) 29 is provided such that the sander indicated by the reference numeral 37 in Fig. 10 touches the workpiece W. Slight tightening of the jaws 13 may gradually bring the workpiece W toward the sander 37.

The situation of Fig. 10 can be used with a first embodiment of Fig. 2 as well as with a second embodiment of Fig. 3 to 7, too.

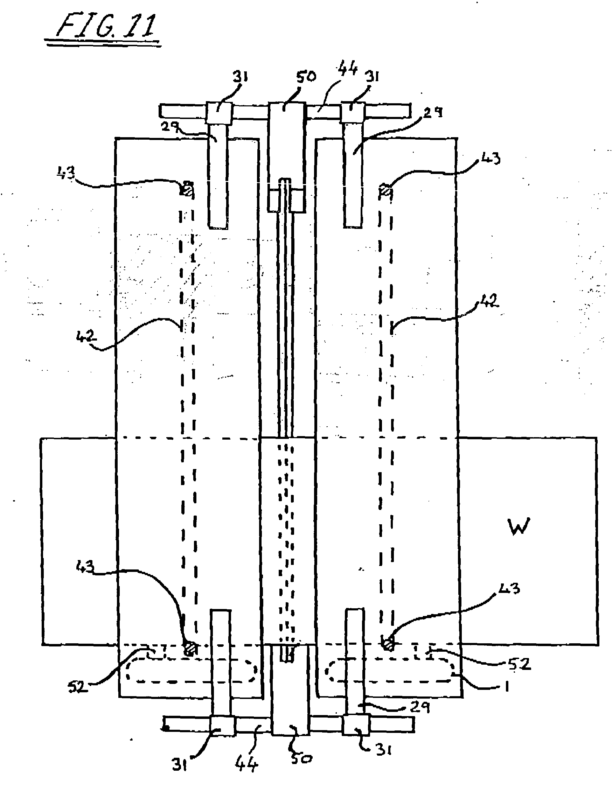

Fig. 11 shows a plan view of a further preferred embodiment of the worktop section of a worktable setup for jig saw cross-cut which table is provided with camping bars 42 running along the length of the jaws 13 and suspended underneath the jaws 13 by means of long bolts 43 such that the workpiece W is clamped beneath the jaws 13 between the underside of the jaws 13 and the clamping bars 42. The jaws 13 are set at parallel spaced positions so as to suite a jig saw (not shown) therebetween which is guided along their inner edges 13a.

Further, a workpiece support 29 of the type as already shown in the Fig. 8 and 9 is mounted at each face end of each jaw 13. So that four workpiece supports 29 are provided in the embodiment of Fig. 11. Whereas the workpiece supports 29 extend perpendicular to the length of the jaws 13 in the situations as shown in the Fig. 8 and 10, the workpiece supports 29 extend in the direction of the length of the jaws 13 in the situation of Fig. 11.

Each pair of workpiece supports 29 positioned at the same face end of the jaws 13 is connected by a so-called saw end plate bar 44 which runs through a rectangular opening of a square 46 arranged at the underside of the height adjusters 31 (cf. Fig. 8). The saw end plate bar 44 also runs through a further rectangular opening formed in an end portion of a saw end plate 50.

The saw end plate 50 and the surrounding arrangement is depicted in better detail

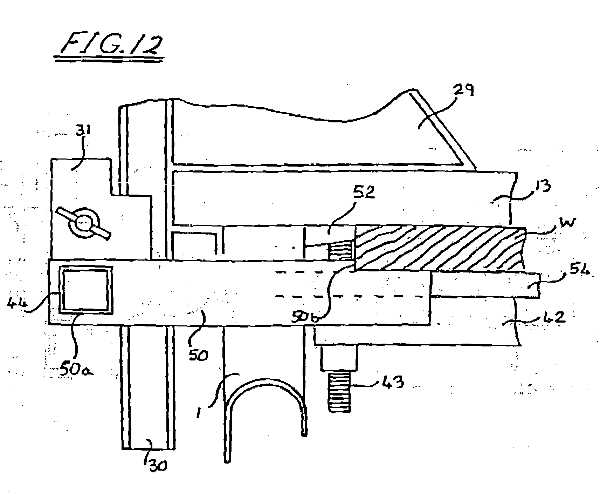

in Fig. 12 showing a side view of the embodiment of Fig. 11. As shown in Fig. 12, the cross section of the saw end plate bar 44 essentially corresponds to that of the opening 50a in the saw end plate 50; this applies to the opening of the square 46 of the height adjusters 31 (cf. Fig. 8), too.

At its inner end portion facing into the space between both jaws 13, both the saw end plates 50 each are provided with a vertical recess 50a which extends in the direction of the length of the space between the jaws 13 and, thus, in the direction of the movement of the blade of the jig saw (not shown) and is open to the space between the jaws 13. The recess 50a is shown in Fig. 11. Further, the saw end plate 50 comprises at its inner end portion a vertical step 50b which extends perpendicular to the length of the jaws 13 as shown in Fig. 12.

Beneath the jaws 13, alignment elements 52 are provided which are mounted to the top frame 1 (a part of the top frame is shown in dotted lines in Fig. 11 and in solid lines in Fig. 12). The alignment elements 52 and the vertical step 50b of the saw end plate 50 cooperate with each other so as to align the workpiece W in a line perpendicular to the length of the jaws 13 such that the jig saw (not shown) can machine the workpiece W at a true right angle up to its very end

## Claims

1. A worktable system comprising a supporting structure (1), fastening means (13) supported by said supporting structure (1) for fastening a workpiece (W), and a tool support means (15, 17, 18; 22, 24, 25, 26) for supporting a tool, in particular a power tool, wherein said fastening means (13) are adapted to provide guidance for movement of said tool support means, so as to machine the workpiece (W) by said tool while it is fastened by said fastening means (13),
**characterized in that** said tool support means (15, 17, 18; 22, 24, 25, 26) comprises a sliding mount (17, 18; 25, 26) for carrying the tool, said sliding mount being movable at an angle, preferably at a right angle, with relation to the direction of the guidance provided by said fastening means (13).

2. A worktable system according to claim 1,
**characterized by** stop means (12; 28) for limiting the directional guidance.

3. A worktable system according to claim 1 or 2, wherein said fastening means comprise jaws (13),
**characterized in that** at least one edge (13a) of at least one jaw (13) is adapted to provide guidance for movement of said tool support means (22, 24, 25, 26).

4. A worktable system according to claim 3,
**characterized in that** said tool support means comprises a guidance means (24) having at least one edge to operatively cooperate with at least one edge (13a) of at least one jaw (13).

5. A worktable system according to claim 4,
**characterized in that** said guidance means are provided for movement of said tool support means.

6. A worktable system according to claim 4 or 5, wherein said fastening means (13) comprise at least one groove (14)
**characterized in that** said guidance means comprises at least one slider (15; 22) slidably received in said at least one groove (14).

7. A worktable system according to at least any one of the preceding claims,
**characterized by** stop means (27) for limiting the movement path of the sliding mount (25).

8. A worktable system according to at least any one of the preceding claims, wherein said fastening means comprise jaws (13),
**characterized in that** said fastening means further comprise a movable clamping element (42) provided beneath the jaws and to be tightened up to the underside of at least one jaw (13) for clamping the workpiece (W) against the underside of said jaw (13).

9. A worktable system according to at least any one of the preceding claims,
further comprising alignment means (50a; 52) for aligning the workpiece (W) in relation to said fastening (13) means wherein said fastening means comprise jaws (13),
**characterized in that** said alignment means (50a; 52) are adapted so as to align the workpiece in a line essentially perpendicular to the jaw length.

10. A worktable system according to at least any one of the preceding claims, wherein said fastening means comprise jaws (13),
**characterized by** support and alignment means (50) provided between the jaws (13) for supporting and aligning a workpiece (W) at a point or points along the machining line of the tool.

11. A worktable system according to claim 10,
**characterized in that** said support and alignment means (50) are adjustable from side to side and/or in vertical direction.

12. A worktable system according to at least any one of the preceding claims,
**characterized by** blade guiding means (54) to be situated beneath the workpiece (W) for guiding a blade (56) of a jig saw.

13. A worktable system according to at least any one of the preceding claims,
**characterized by** holding means (29) to be attached to said fastening means (13) for holding the workpiece (W) at an adjustable height.

14. A worktable system according to at least any one of the preceding claims,
**characterized in that** said fastening means (13) are adapted so as to allow the workpiece to be moved in relation to said fastening means (13).

15. A worktable system according to claim 14,
**characterized by** stops for limiting the movement path of the workpiece.

16. A device for supporting a tool, in particular a power tool, on a worktable having fastening means (13) for fastening a workpiece (W),
comprising a sliding base (15; 22) for slidabely engaging with the fastening means (13) of the worktable so as to achieve a directional movement with relation to the worktable,
**characterized by** a sliding mount (17, 18; 25, 26) for carrying the tool, said sliding mount being movable at an angle, preferably at a right angle, with relation to the direction of the movement of the sliding base (15; 22).

17. A device according to claim 16.
**characterized by** stop means (27) for limiting the movement path of the sliding mount (25).

## Patentansprüche

1. Arbeitstischsystem mit einer Stützstruktur (1), einer von der Stützstruktur (1) getragenen Befestigungseinrichtung (13) zur Befestigung eines Werkstückes (W) und einer Werkzeughalterungseinrichtung (15, 17, 18; 22, 24, 25, 26) zur Halterung eines Werkzeuges, insbesondere eines Elektrowerkzeuges, wobei die Befestigungseinrichtung ausgebildet ist, um eine Führung zur Bewegung der Werkzeughalterungseinrichtung zu bilden, um das Werkstück (W) durch das Werkzeug zu bearbeiten, während es durch die Befestigungseinrichtung (13) befestigt ist,
**dadurch gekennzeichnet, dass** die Werkzeughalterungseinrichtung (15, 17, 18; 22, 24, 25, 26) eine verschiebbare Halterung (17, 18; 25, 26) zum Tragen des Werkzeuges aufweist, wobei die verschiebbare Halterung in einem Winkel, vorzugsweise in einem rechten Winkel, gegenüber der Richtung der von der Befestigungseinrichtung (13) gebildeten Führung bewegbar ist.

2. Arbeitstischsystem nach Anspruch 1,
**gekennzeichnet durch** Anschlagmittel (12; 28) zur Begrenzung der Richtungsführung.

3. Arbeitstischsystem nach Anspruch 1 oder 2, bei welchem die Befestigungseinrichtung Backen (13) aufweist,
**dadurch gekennzeichnet, dass** mindestens ein Rand (13a) mindestens einer Backe (13) ausgebildet ist, um eine Führung für die Bewegung der Werkzeughalterungseinrichtung (22, 24, 25, 26) zu bilden.

4. Arbeitstischsystem nach Anspruch 3,
**dadurch gekennzeichnet, dass** die Werkzeughalterungseinrichtung eine Führungseinrichtung (24) mit mindestens einem Rand (13) aufweist, um mit mindestens einem Rand (13a) der mindestens einen Backe (13) zusammenzuwirken.

5. Arbeitstischsystem nach Anspruch 4,
**dadurch gekennzeichnet, dass** die Führungseinrichtung zur Bewegung der Werkzeughalterungseinrichtung vorgesehen ist.

6. Arbeitstischsystem nach Anspruch 4 oder 5, bei welchem die Befestigungseinrichtung (13) mindestens eine Nut (14) aufweist,
**dadurch gekennzeichnet, dass** die Führungseinrichtung mindestens einen Schlitten (15; 22) aufweist, der in der mindestens einen Nut (14) verschiebbar aufgenommen ist.

7. Arbeitstischsystem nach mindestens einem der vorangegangenen Ansprüche,
**gekennzeichnet durch** Anschlagmittel (27) zur Begrenzung des Bewegungsweges der verschiebbaren Halterung (25).

8. Arbeitstischsystem nach mindestens einem der vorangegangenen Ansprüche, bei welchem die Befestigungseinrichtung Backen (13) aufweist,
**dadurch gekennzeichnet, dass** die Befestigungseinrichtung außerdem mindestens ein bewegliches Klemmelement (42) aufweist, das unterhalb der Backen vorgesehen und zum Klemmen des Werkstückes (W) gegen die Unterseite der Backe (13) nach oben gegen die Unterseite der mindestens einen Backe (13) zu spannen ist.

9. Arbeitstischsystem nach mindestens einem der vorangegangenen Ansprüche,
ferner mit einer Ausrichteinrichtung (50a; 52) zum Ausrichten des Werkstückes (W) gegenüber der Befestigungseinrichtung,
**dadurch gekennzeichnet, dass** die Ausrichteinrichtung (50a; 52) ausgebildet ist, um das Werkstück in Linie im wesentlichen rechtwinklig zur Backenlänge auszurichten.

10. Arbeitstischsystem nach mindestens einem der vorangegangenen Ansprüche,
bei welchem die Befestigungseinrichtung Backen (13) aufweist, **gekennzeichnet durch** eine zwischen den Backen (13) vorgesehene Halterungs-und Ausrichteinrichtung (50) zur Halterung und Ausrichtung eines Werkstückes (W) an einem Punkt oder an Punkten entlang der Bearbeitungslinie des Werkzeuges.

11. Arbeitstischsystem nach Anspruch 10,
**dadurch gekennzeichnet, dass** die Halterungs- und Ausrichteinrichtung (50) in seitlicher und/oder vertikaler Richtung justierbar ist.

12. Arbeitstischsystem nach mindestens einem der vorangegangenen Ansprüche,
**gekennzeichnet durch** eine unterhalb des Werkstückes (W) anzuordnende Sägeblattführungseinrichtung (54) zur Führung eines Sägeblattes (56) einer Stichsäge.

13. Arbeitstischsystem nach mindestens einem der vorangegangenen Ansprüche,
**gekennzeichnet durch** an der Befestigungseinrichtung (13) anzubringende Haltemittel (29) zum Halten des Werkstückes (W) auf einer einstellbaren Höhe.

14. Arbeitstischsystem nach mindestens einem der vorangegangenen Ansprüche,
**dadurch gekennzeichnet, dass** die Befestigungseinrichtung (13) so ausgeführt ist, dass das Werkstück gegenüber der Befestigungseinrichtung (13) bewegt werden kann.

15. Arbeitstischsystem nach Anspruch 14,
**gekennzeichnet durch** Anschläge zur Begrenzung des Bewegungsweges des Werkstückes.

16. Vorrichtung zur Halterung eines Werkzeuges, insbesondere eines Elektrowerkzeuges, auf einem Werktisch mit einer Befestigungseinrichtung (13) zur Befestigung eines Werkstückes (W),
mit einer Verschiebebasis (15; 22) zum verschiebbaren Eingriff mit der Befestigungseinrichtung (13) des Werktisches, um eine Richtungsbewegung gegenüber dem Werktisch zu erzielen,
**gekennzeichnet durch** eine verschiebbare Halterung (17, 18; 25, 26) zum Tragen des Werkzeuges, wobei die verschiebbare Halterung in einem Winkel, vorzugsweise in einem rechten Winkel, gegenüber der Richtung der Bewegung der Verschiebebasis (15; 22) bewegbar ist.

17. Vorrichtung nach Anspruch 16, **gekennzeichnet durch** Anschlagmittel (27) zur Begrenzung des Bewegungsweges der verschiebbaren Halterung (25).

## Revendications

1. Système de table de travail comprenant une structure de support (1), des moyens de fixation (13) supportés par ladite structure de support (1) pour attacher une pièce à usiner (W), et des moyens de support d'outil (15, 17, 18 22, 24, 25, 26) pour supporter un outil, en particulier un outil électrique, dans lequel lesdits moyens de fixation (13) sont adaptés pour réaliser le guidage du déplacement desdits moyens de fixation d'outil, pour usiner la pièce à usiner (W) à l'aide dudit outil pendant qu'elle est attachée par lesdits moyens de fixation (13), **caractérisé en ce que** lesdits moyens de support d'outil (15, 17, 18 ; 22, 24, 25, 26) comprennent un montant coulissant (17, 18 ; 25, 26) pour porter l'outil, ledit montant coulissant étant mobile selon un certain angle, de préférence un angle droit, par rapport à la direction du guidage réalisé par lesdits moyens de fixation (13).

2. Système de table de travail selon la revendication 1, **caractérisé par** des moyens d'arrêt (12 ; 28) servant à limiter le guidage directionnel.

3. Système de table de travail selon la revendication 1 ou 2, dans lequel lesdits moyens de fixation comprennent des mâchoires (13), **caractérisé en ce qu'**au moins un bord (13a) d'au moins une mâchoire (13) est adapté pour réaliser le guidage du déplacement desdits moyens de support d'outil (22, 24, 25, 26).

4. Système de table de travail selon la revendication 3, **caractérisé en ce que** lesdits moyens de support d'outil comprennent des moyens de guidage (24) ayant au moins un bord pour coopérer de manière opérationnelle avec au moins un bord (13a) d'au moins une mâchoire (13).

5. Système de table de travail selon la revendication 4, **caractérisé en ce que** lesdits moyens de guidage sont prévus pour réaliser le déplacement desdits moyens de support d'outil.

6. Système de table de travail selon la revendication 4 ou 5, dans lequel lesdits moyens de fixation (13) comprennent au moins une rainure (14), **caractérisé en ce que** lesdits moyens de guidage comprennent au moins une glissière (15 ; 22) logée d'une façon coulissante dans ladite au moins une rainure (14).

7. Système de table de travail selon au moins l'une quelconque des revendications précédentes, **caractérisé par** des moyens d'arrêt (27) servant à limiter la course du montant coulissant (25).

8. Système de table de travail selon au moins l'une quelconque des revendications précédentes, dans lequel lesdits moyens de fixation comprennent des mâchoires (13), **caractérisé en ce que** lesdits moyens de fixation comprennent en outre un élément de serrage mobile (42) prévu en dessous des mâchoires et à accrocher sur le côté inférieur d'au moins une mâchoire (13) afin de serrer la pièce à usiner (W) contre la face inférieure de ladite mâchoire (13).

9. Système de table de travail selon au moins l'une quelconque des revendications précédentes, comprenant en outre des moyens d'alignement (50a ; 52) pour aligner la pièce à usiner (W) par rapport auxdits moyens de fixation (13), dans lequel lesdits moyens de fixation comprennent des mâchoires (13), **caractérisé en ce que** lesdits moyens d'alignement (50a ; 52) sont adaptés de manière à aligner la pièce à usiner dans une ligne essentiellement perpendiculaire à l'étendue de la mâchoire.

10. Système de table de travail selon au moins l'une quelconque des revendications précédentes, dans lequel lesdits moyens de fixation comprennent des mâchoires (13), **caractérisé par** des moyens de support et d'alignement (50) prévus entre les mâchoires (13) pour supporter et aligner une pièce à usiner (W) en un ou plusieurs point(s) situé(s) le long de la ligne d'usinage de l'outil.

11. Système de table de travail selon la revendication 10, **caractérisé en ce que** lesdits moyens de support et d'alignement (50) sont réglables d'un côté à l'autre et/ou dans une direction verticale.

12. Système de table de travail selon au moins l'une quelconque des revendications précédentes, **caractérisé par** des moyens de guidage de lame (54) à positionner en dessous de la pièce à usiner (W) pour guider une lame (56) d'une scie sauteuse.

13. Système de table de travail selon au moins l'une quelconque des revendications précédentes, **caractérisé par** des moyens de maintien (29) à attacher auxdits moyens de fixation (13) pour maintenir la pièce à usiner (W) à une hauteur réglable.

14. Système de table de travail selon au moins l'une quelconque des revendications précédentes, **caractérisé en ce que** lesdits moyens de fixation (13) sont adaptés de manière à permettre le déplacement de la pièce à usiner par rapport auxdits moyens de fixation (13).

15. Système de table de travail selon la revendication 14, **caractérisé par** des arrêts servant à limiter la course de la pièce à usiner.

16. Dispositif pour supporter un outil, en particulier un outil électrique, sur une table de travail comportant des moyens de fixation (13) pour fixer une pièce à usiner (W), comprenant une base coulissante (15 ; 22) pour engager d'une façon coulissante les moyens de fixation (13) de la table de travail de manière à réaliser un déplacement directionnel par rapport à la table de travail, **caractérisé par** un montant coulissant (17, 18 ; 25, 26) pour porter l'outil, ledit montant coulissant étant mobile selon un certain angle, de préférence un angle droit, par rapport à la direction du déplacement de la base coulissante (15 ; 22).

17. Dispositif selon la revendication 16, **caractérisé par** un moyen d'arrêt (27) servant à limiter la course du montant coulissant (25).
